# EUROPÄISCHE PATENTSCHRIFT

(11) **EP 4 019 789 B1**
(45) Veröffentlichungstag und Bekanntmachung des Hinweises auf die Patenterteilung: **18.06.2025**
(21) Anmeldenummer: 22158004.6
(22) Anmeldetag: 16.01.2019
(51) Int. Cl.: F16B 13/06, F16B 12/24, A47B 88/43, A47B 88/95

(54) **MÖBELBESCHLAG**
FURNITURE FITTING
FERRURE DE MEUBLE

(30) Priorität: 01.02.2018 AT 501012018
(43) Veröffentlichungstag der Anmeldung: 29.06.2022
(62) Teilanmeldung aus: 19701960.7
(73) Patentinhaber: Julius Blum GmbH, 6973 Höchst (AT)
(72) Erfinder: FEUERSTEIN, Markus, 6974 Gaißau (AT); IRGANG, Markus, 6844 Altach (AT)
(74) Vertreter: Torggler & Hofmann Patentanwälte - Innsbruck

(56) Entgegenhaltungen:
- DE-U1- 202015 008 847
- DE-U1- 29 605 547
- TW-A- 201 100 648

## Beschreibung

Die vorliegende Erfindung betrifft einen Möbelbeschlag zum Verbinden zweier Möbelteile mit den Merkmalen des Oberbegriffs des Anspruchs 1, sowie ein Möbel mit wenigstens zwei Möbelteilen, welche durch zumindest einen Möbelbeschlag miteinander verbunden sind.

Durch den Stand der Technik bekannte Ausführungsformen eines Möbelbeschlages gehen beispielsweise aus der DE 20 2015 008 847 U1, der TW 201 100 648 A oder der DE 296 05 547 U1 hervor.

Ein gattungsgemäßer Möbelbeschlag zum Verbinden zweier Möbelteile geht aus der EP 0698357 B1 hervor. Dabei weist der darin beschriebene Möbelbeschlag einen Dübel zur Befestigung des Möbelbeschlags an einem der Möbelteile auf. Des Weiteren ist ein Spreizelement vorgesehen, welches relativ zum Dübel bewegbar gelagert ist, wobei der Dübel, ausgehend von einer Lösestellung, durch eine Relativbewegung des Spreizelements in eine Spannstellung überführbar ist. Diese Relativbewegung des Spreizelements gegenüber dem Dübel kann dabei durch eine Dreh- oder Schwenkbewegung eines Beschlagkörpers, an welchem das Spreizelement befestigt ist, ausgeführt werden. Es kann der Beschlagkörper, ausgehend von einer Lösestellung, in welcher der Dübel gelöst ist, in eine Spannstellung, in welcher der Dübel gespannt ist, gedreht oder geschwenkt werden. Hierfür wird der Beschlagkörper aus einer ersten Stellung (einer Lösestellung) in eine zweite Stellung (eine Spannstellung) gedreht oder geschwenkt, wobei die Bewegung durch einen Anschlag begrenzt wird. Durch ein Zurückdrehen oder -schwenken aus der Spannstellung des Beschlagkörpers kann der Dübel wieder gelöst werden.

Nachteilig am bekannten Stand der Technik ist, dass durch einen Bediener oft eine zu hohe Kraft aufgewendet wird, um den Beschlagkörper aus einer Lösestellung in eine Spannstellung zu befördern und dabei der Anschlag durch die zu hohe Kraft überfahren wird, wodurch der Möbelbeschlag beschädigt wird. Es kann auch vorkommen, dass wenn sich der Beschlagkörper in einer Spannstellung befindet, ein Bediener diesen lösen möchte und dabei den Beschlagkörper in die falsche Richtung drückt und so den Anschlag überfährt, wodurch der Möbelbeschlag ebenfalls beschädigt wird.

Aufgabe der vorliegenden Erfindung ist es, einen Möbelbeschlag zum Verbinden zweier Möbelteile bereitzustellen, bei dem die oben beschriebenen Nachteile des Standes der Technik vermieden werden.

Diese Aufgabe wird durch einen Möbelbeschlag mit den Merkmalen des Anspruchs 1 sowie einem Möbel mit den Merkmalen des Anspruchs 11 gelöst. Vorteilhafte Ausführungsformen der Erfindung sind in den abhängigen Ansprüchen definiert.

Erfindungsgemäß ist vorgesehen, dass der Beschlagkörper derart mit dem wenigstens einen Spreizelement verbunden ist, dass der wenigstens eine Dübel durch eine Dreh- oder Schwenkbewegung des Beschlagkörpers in eine erste Betätigungsrichtung, ausgehend von einer ersten Lösestellung, in eine Spannstellung bewegbar ist, wobei der wenigstens eine Dübel, ausgehend von der Spannstellung, durch Fortsetzen der Dreh- oder Schwenkbewegung des Beschlagkörpers in die erste Betätigungsrichtung in eine von der ersten Lösestellung verschiedene zweite Lösestellung bewegbar ist, wobei das wenigstens eine Spreizelement als L-förmiger Bügel ausgeführt ist, dessen einer Schenkel axial im wenigstens einen Dübel geführt ist und dessen anderer Schenkel im Beschlagkörper drehbar gelagert ist.

Vorteilhaft daran ist, dass der Beschlagkörper ausgehend von einer Spannstellung des wenigstens einen Dübels in mehreren Richtungen lösbar ist und es nicht dazu kommen kann, dass der Möbelbeschlag durch Wahl der falschen Betätigungsrichtung beschädigt wird. Weiters weist ein erfindungsgemäßer Möbelbeschlag zwei Lösestellungen auf, wobei der Möbelbeschlag je nach Zugänglichkeit der Befestigungsposition in verschiedene Lösestellungen bewegt werden kann.

Es kann vorgesehen sein, dass der wenigstens eine Dübel eine Mittelachse aufweist und der Beschlagkörpers im Zuge der Dreh- oder Schwenkbewegung um eine Drehachse dreh- oder schwenkbar ist, wobei die Drehachse quer, vorzugsweise rechtwinklig, zur Mittelachse angeordnet ist.

Vorzugsweise ist vorgesehen, dass das wenigstens eine Spreizelement - vorzugsweise an einem freien Ende - einen Spreiznocken aufweist, welcher im wenigstens einen Dübel angeordnet ist. Dabei kann vorgesehen sein, dass der wenigstens eine Dübel durch eine in ihrer Längsrichtung zumindest teilweise geschlitzte Hülse ausgeführt ist, wobei das Spreizelement in dieser Hülse angeordnet ist, wobei an einem Ende des Spreizelementes ein Spreiznocken angebracht ist. Wenn nun dieser Spreiznocken in einer axialer Richtung (in Richtung des Hülseninneren) verschoben wird, so wird der Dübel mit seiner geschlitzten Außenfläche aufgespreizt, wodurch der Dübel durch Flächenpressung in einer Bohrung, in welcher der Dübel angeordnet ist, gehalten wird. Wenn nun das Spreizelement wieder zurückgestellt wird bzw. der Spreiznocken aus dem Inneren des Dübels herausbewegt wird, so stellt sich die Hülse in ihre Ausgangsform wieder zurück (wenn der Dübel sich in einer Spannstellung nur elastisch verformt) und der Dübel kann wieder sicher aus der Bohrung entfernt werden.

Es kann auch vorgesehen sein, dass das wenigstens eine Spreizelement am wenigstens einen Beschlagkörper drehbar gelagert ist und im wenigstens einen Dübel axial verschiebbar ist.

Es ist vorgesehen, dass das wenigstens eine Spreizelement als L-förmiger Bügel ausgeführt ist, wobei ein erster Schenkel des L-förmiger Bügels axial im wenigstens einen Dübel geführt ist und ein zweiter Schenkel im Beschlagkörper drehbar gelagert ist. Dabei kann vorgesehen sein, dass durch eine Dreh- oder Schwenkbewegung des Beschlagkörpers die radiale Bewegung in eine axiale Bewegung umgesetzt wird, wobei die axiale Bewegung des Spreizelements im wenigstens einen Dübel zu einer Spannung oder Lösung des Dübels führt.

Des Weiteren kann vorgesehen sein, dass der wenigstens eine Dübel mit einem Träger verbunden ist und dass das wenigstens eine Spreizelement um eine Drehachse drehbar am Beschlagkörper gelagert ist. Weiters kann es vorgesehen sein, dass der Beschlagkörper drei Anlageflächen aufweist, von denen jeweils eine, je nach Stellung des Beschlagkörpers, am Träger anliegt und von denen zumindest zwei einen unterschiedlichen Abstand zur Drehachse aufweisen. So kann beispielsweise vorgesehen sein, dass der Träger, welcher an einer ersten Anlagefläche des Beschlagkörpers anliegt, durch eine Dreh- oder Schwenkbewegung des Beschlagkörpers um eine Drehachse an eine zweite Anlagefläche des Beschlagkörpers bewegt wird, wobei die zwei Anlageflächen einen unterschiedlichen Abstand zu der Drehachse aufweisen und somit das Spreizelement axial im Dübel um die Differenz der unterschiedlichen Abstände geführt wird, wobei diese axiale Bewegung des Spreizelements den Dübel zwischen einer Lösestellung und einer Spannstellung bewegen kann.

Des Weiteren kann vorzugsweise vorgesehen sein, dass durch eine Dreh- oder Schwenkbewegung des Beschlagkörpers gegenüber dem wenigstens einen Dübel ein Abstand zwischen einer Drehachse, in welcher das wenigstens eine Spreizelement im wenigstens einen Beschlagkörper drehbar gelagert ist, und dem wenigstens einen Dübel vergrößerbar oder verkleinerbar ist. Durch diese Vergrößerung oder Verkleinerung des Abstands kann, wie zuvor beschrieben, eine axiale Bewegung des Spreizelements, welches im wenigstens einen Beschlagkörper drehbar gelagert ist, im wenigstens einen Dübel (in welchem das Spreizelement axial bewegbar gelagert ist) hervorgerufen werden.

Es kann auch vorgesehen sein, das der Beschlagkörper wenigstens zweiteilig ausgebildet ist, wobei ein Befestigungsteil zur Befestigung des wenigstens einen Spreizelements vorgesehen ist und ein Führungsteil vorgesehen ist, wobei das Führungsteil an dem wenigstens einen Dübel und/oder einem Träger anliegt, wobei der Träger mit dem wenigstens einen Dübel verbunden ist. Durch eine solche Ausgestaltung kann vorgesehen sein, dass unterschiedliche Regionen des Beschlagkörpers durch unterschiedliche Teile ausgeführt sind, wobei die unterschiedlichen Regionen des Beschlagkörpers oft unterschiedlichen Anforderungen unterliegen. So kann beispielsweise der Beschlagkörper ein Befestigungsteil zur Befestigung des wenigstens einen Spreizelements aufweisen. Die Anforderungen an ein solches Befestigungsteil sind oft eine hohe Elastizität, um den auftretenden hohen Kräften, welche durch das Spreizelement übertragen werden, ohne plastische Verformung Stand zu halten. Des Weiteren kann vorgesehen sein, dass das Befestigungsteil aus einem weicheren oder härteren Material als das Spreizelement ausgebildet ist. Dadurch ergeben sich keine oder geringere Abnutzungen, entweder am Befestigungsteil oder am Spreizelement, durch die kontinuierliche Bewegung zwischen diesen beiden Bauteilen. Es kann demzufolge das Befestigungsteil beispielsweise aus einem Kunststoff gefertigt sein und das Spreizelement aus einem Metall, wodurch der weitere Vorteil gegeben ist, dass bei einer Relativbewegung zwischen Spreizelement und Befestigungsteil nur minimale Geräusche auftreten. In weiterer Folge kann somit auch das Führungsteil aus einem anderen Material als der daran anliegende Dübel oder der daran anliegende Träger ausgebildet sein.

Vorzugsweise ist vorgesehen, dass der Beschlagkörper gegenüber dem Dübel zumindest in der Spannstellung, vorzugsweise auch in der ersten und der zweiten Lösestellung, eine vordefinierte Rastposition aufweist. Eine solche Rastposition stellt die Relativstellung zwischen Beschlagkörper und Dübel sicher und verhindert ein ungewolltes Bewegen aus dieser Stellung heraus. So kann vorgesehen sein, dass diese Rastposition durch eine Noppe herbeiführbar ist, welche in der gewünschten Stellung in eine dafür vorgesehene Ausnehmung einrastet. Es kann jedoch auch vorgesehen sein, dass gegenüber einer Drehachse zwischen den einzelnen Stellungen exzentrische Kanten vorgesehen sind, welche bei einer Dreh- oder Schwenkbewegung des Beschlagkörpers gegenüber dem Dübel aus einer ersten in eine zweite Stellung überfahren werden müssen. Durch eine solche Ausführung würde bei einer Dreh- oder Schwenkbewegung aus einer ersten Stellung in eine zweite Stellung der Beschlagkörper an der vorgesehenen Stellung einschnappen oder auch einrasten.

Besonders bevorzugt kann vorgesehen sein, dass der Beschlagkörper als Halteteil für eine Frontblende einer Schublade ausgebildet ist. Demzufolge kann der Beschlagkörper an einer Frontblende befestigt sein und die Verbindungsvorrichtung zur Verbindung des Möbelbeschlags an einer Seitenwand einer Schublade, wobei die Frontblende durch die Verbindungsvorrichtung mit der Seitenwand der Schublade lösbar verbindbar ist. Durchaus denkbar ist auch, dass die Verbindungsvorrichtung an der Frontblende angeordnet ist und der Beschlagkörper an der Seitenwand der Schublade. In gleicher Weise kann es auch vorgesehen sein, dass der Beschlagkörper als Halteteil für eine Schubladenreling ausgebildet ist, wobei der Beschlagkörper an einer Frontblende oder einer Seitenwand einer Schublade befestigt sein kann und die Verbindungsvorrichtung an der Schubladenreling. Es kann auch vorgesehen sein, dass die Schubladenreling den Beschlagkörper aufweist und die Verbindungsvorrichtung an der Frontblende oder an der Seitenwand der Schublade angeordnet ist. In gleicher Weise kann auch vorgesehen sein, dass durch den Möbelbeschlag zum Verbinden zweier Möbelteile ein Gehäuse geformt wird, wobei jeweils zwei Teile des Gehäuses durch einen Möbelbeschlag miteinander verbunden werden.

Des Weiteren wird Schutz begehrt für ein Möbel mit wenigstens zwei Möbelteilen, welche durch zumindest einen erfindungsgemäßen Möbelbeschlag miteinander verbindbar sind.

Verschiedene Ausführungsformen der vorliegenden Erfindung ergeben sich anhand der Figuren sowie der dazugehörigen Figurenbeschreibung. Dabei zeigen:
- Fig. 1: eine Explosionsdarstellung zweier zu verbindenden Möbelteile mit einem Ausführungsbeispiel eines erfindungsgemäßen Möbelbeschlags,
- Fig. 2a: ein Ausführungsbeispiel eines erfindungsgemäßen Möbelbeschlags in einer ersten Lösestellung in Verbindung mit einer Frontblende,
- Fig. 2b: eine Detailansicht des Möbelbeschlags der Fig. 2a in Verbindung mit einer Frontblende,
- Fig. 2c: das Ausführungsbeispiel eines Möbelbeschlags der Fig. 2a in einer perspektivischen Ansicht,
- Fig. 3a: ein Ausführungsbeispiel eines erfindungsgemäßen Möbelbeschlags in einer Spannstellung in Verbindung mit einer Frontblende,
- Fig. 3b: eine Detailansicht des Möbelbeschlags der Fig. 2a in Verbindung mit der Frontblende in einer Spannstellung,

- Fig. 3c: der Möbelbeschlags gemäß der Fig. 2a in einer perspektivischen Ansicht,
- Fig. 4a: ein Ausführungsbeispiel eines erfindungsgemäßen Möbelbeschlags in einer zweiten Lösestellung in Verbindung mit einer Frontblende,
- Fig. 4b: eine Detailansicht des Ausführungsbeispiels der Fig. 4a,
- Fig. 4c: das Ausführungsbeispiel der Fig. 4a in einer perspektivischen Ansicht,
- Fig. 5: zwei durch ein Ausführungsbeispiel eines erfindungsgemäßen Möbelbeschlags verbundene Möbelteile,
- Fig. 6: ein Ausführungsbeispiel eines erfindungsgemäßen Möbelbeschlags in einer Explosionsdarstellung,
- Fig. 7a: ein Ausführungsbeispiel eines erfindungsgemäßen Möbelbeschlags in einer ersten Lösestellung,
- Fig. 7b: die in Fig. 7a angedeutete Schnittdarstellung,
- Fig. 8a: das Ausführungsbeispiel der Fig. 7a in einer Spannstellung,
- Fig. 8b: die in Fig. 8a angedeutete Schnittdarstellung,
- Fig. 9a: das Ausführungsbeispiel der Fig. 7a in einer zweiten Lösestellung,
- Fig. 9b: die in Fig. 9a angedeutete Schnittdarstellung,
- Fig. 10a: ein Ausführungsbeispiel eines erfindungsgemäßen Möbelbeschlags in einer Spannstellung,
- Fig. 10b: die in Fig. 10a angedeutete Schnittdarstellung,
- Fig. 10c: die in Fig. 10b angedeutete Detailansicht,
- Fig. 11a: ein Ausführungsbeispiel eines erfindungsgemäßen Möbelbeschlags in einer Lösestellung,
- Fig. 11b: die in Fig. 11a angedeutete Schnittdarstellung,
- Fig. 11c: die in Fig. 11b angedeutete Detailansicht,
- Fig. 12a: ein Ausführungsbeispiel eines erfindungsgemäßen Möbelbeschlags in Verbindung mit einer Schubladenreling in einer ersten Lösestellung,
- Fig. 12b: die in Fig. 12a angedeutete Detailansicht,
- Fig. 13a: ein Ausführungsbeispiel eines erfindungsgemäßen Möbelbeschlags in Verbindung mit einer Schubladenreling in einer Spannstellung,
- Fig. 13b: die in Fig. 13a angedeutete Detailansicht,
- Fig. 14a: ein Ausführungsbeispiel eines erfindungsgemäßen Möbelbeschlags in Verbindung mit einer Schubladenreling in einer zweiten Lösestellung,
- Fig. 14b: die in Fig. 14a angedeutete Detailansicht.

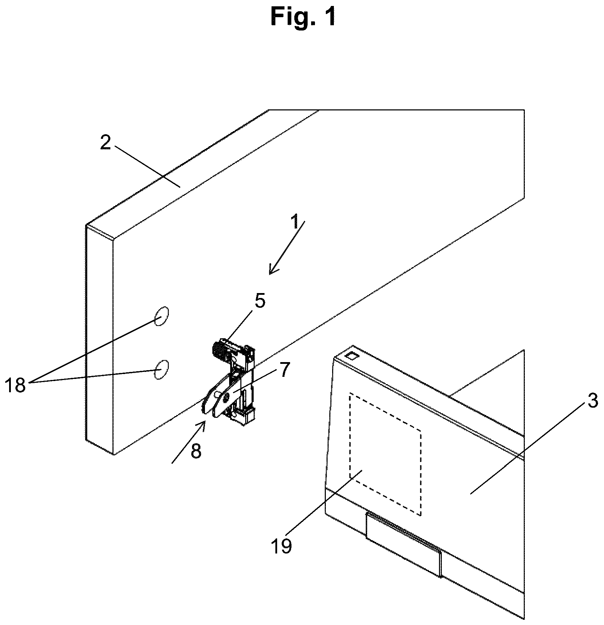

Fig. 1 zeigt eine Explosionsdarstellung zweier zu verbindender Möbelteile mittels eines Ausführungsbeispiels eines erfindungsgemäßen Möbelbeschlags 1. Genauer gesagt handelt es sich bei den zwei zu verbindenden Möbelteilen um eine Frontblende 2 und eine Seitenwand 3 einer Schublade 17, wobei der Möbelbeschlag 1 mit den Dübeln 5 zur Verbindung in die dafür vorgesehene Bohrungen 18 der Frontblende 2 eingeführt wird. Dies wird durch die in Fig. 1 gezeigte erste Lösestellung des Möbelbeschlages 1 ermöglicht, wobei die Dübel 5 gelöst sind. Des Weiteren weist der hier dargestellte Möbelbeschlag 1 eine Verbindungsvorrichtung 8 auf, welche einen Bolzen aufweist. Diese Verbindungsvorrichtung 8 ist durch eine in der Seitenwand 3 der Schublade 17 befindliche Verriegelungsvorrichtung 19 verriegelbar. Eine solche Verriegelungsvorrichtung 19 ist gemäß dem Stand der Technik bereits bekannt. Diese Verriegelungsvorrichtung 19 weist üblicherweise ein Hakenelement auf, welches mit der Verbindungsvorrichtung 8 lösbar verriegelbar ist. Die erste Lösestellung des Möbelbeschlags 1 ist gut erkennbar, in dem der Beschlagkörper 7 des Möbelbeschlags 1 nach links geneigt ist. Dieser Beschlagkörper 7 ist dreh- oder schwenkbar mit den Dübeln 5 verbunden, wobei durch eine Dreh- oder Schwenkbewegung des Beschlagkörpers 7 Spreizelemente 6, welche im Inneren der Dübel 5 angeordnet sind, in axialer Richtung der Dübel 5 bewegbar sind und somit die Dübel 5 zwischen einer Spannstellung und einer Lösestellung bewegen können. Dies wird in den folgenden Figuren noch im Detail beschrieben.

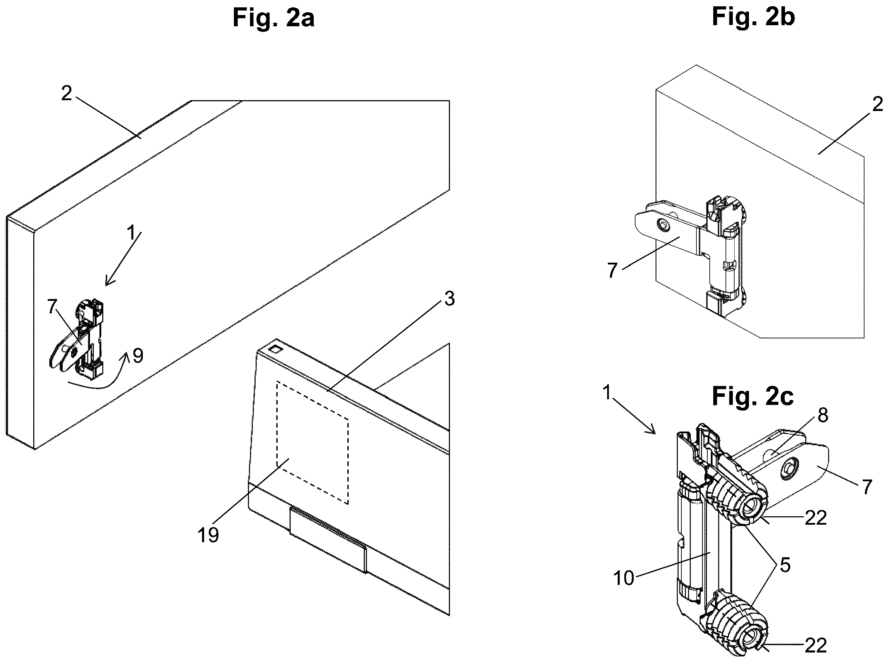

In Fig. 2a ist ein Ausführungsbeispiel eines erfindungsgemäßen Möbelbeschlags 1 in Verbindung mit einer Frontblende 2 in einer ersten Lösestellung gezeigt. Dabei ist der Möbelbeschlag 1, wie er bereits durch die Figur 1 gezeigt ist, mit seinen Dübeln 5 in die dafür vorgesehenen Bohrungen 18 in der Frontblende 2 eingeführt und verharrt in einer ersten Lösestellung.

Fig. 2b zeigt eine Detailansicht des Möbelbeschlags 1 in Verbindung mit der Frontblende 2 aus Fig. 2a.

Fig. 2c zeigt den Möbelbeschlag 1 aus Fig. 2a in einer ersten Lösestellung in einer perspektivischen Ansicht. Dabei ist gut zu erkennen, dass der Möbelbeschlag 1 zwei Dübel 5 aufweist, welche mit einem Träger 10 verbunden sind. Der Möbelbeschlag 1 weist einen Beschlagkörper 7 auf, welcher dreh- oder schwenkbar mit dem Träger 10 verbunden ist. Eine Verbindungsvorrichtung 8 (welche als Bolzen ausgeführt ist) ist dabei am Beschlagkörper 7 angeordnet. Die Dübel 5 weisen dabei eine Mittelachse 22 auf.

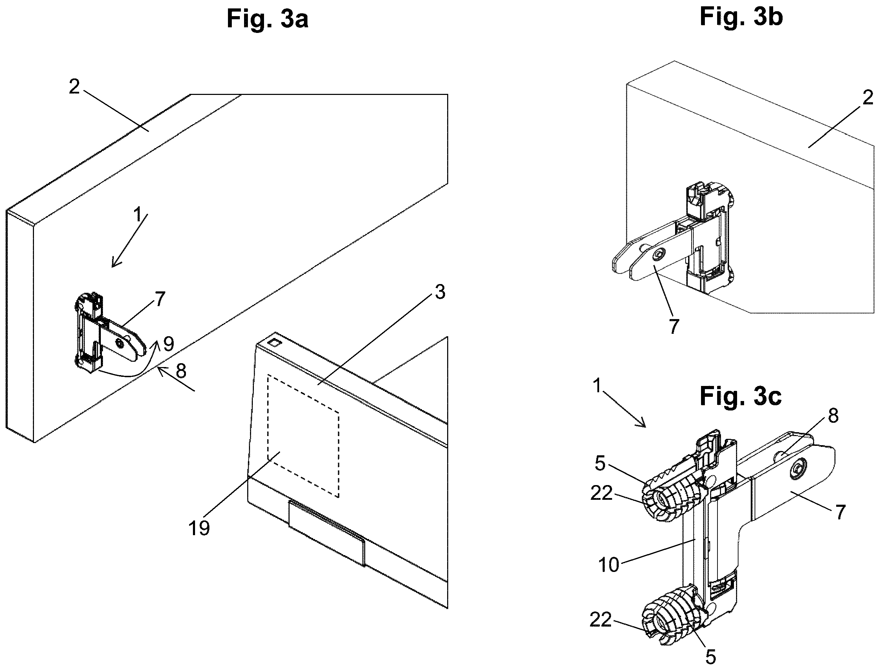

In Fig. 3a ist das erfindungsgemäße Ausführungsbeispiel der Fig. 2a durch eine Dreh- oder Schwenkbewegung des Beschlagkörpers 7 in eine erste Betätigungsrichtung 9 in eine Spannstellung gebracht worden, wodurch die Dübel 5 mittels der Spreizelemente 6 gespannt wurden und der Möbelbeschlag 1 und die Frontblende 2 miteinander verbunden werden. Der Beschlagkörper 7 wurde dabei in eine erste Betätigungsrichtung 9 um eine Drehachse 11 gedreht oder geschwenkt, welche Drehachse 11 quer zu den Mittelachsen 22 der Dübel 5 liegt. Genauer gesagt liegt die Drehachse 11 in diesem Ausführungsbeispiel im Wesentlichen rechtwinklig zu den Mittelachsen 22 der Dübel 5.

Fig. 3b zeigt den Möbelbeschlag 1 der Fig. 3a, welcher sich in einer Spannstellung befindet, in Detailansicht.

Fig. 3c zeigt den Möbelbeschlag 1 aus den Fig. 3a und 3b in einer perspektivischen Ansicht, wodurch die Einzelteile (Dübel 5, Träger 10, Beschlagkörper 7 und Verbindungsvorrichtung 8) des Möbelbeschlags 1 erkennbar sind. Des Weiteren ist in dieser Ansicht erkennbar, wie die Dübel 5 in der Spannstellung einen aufgespreizten Zustand aufweisen.

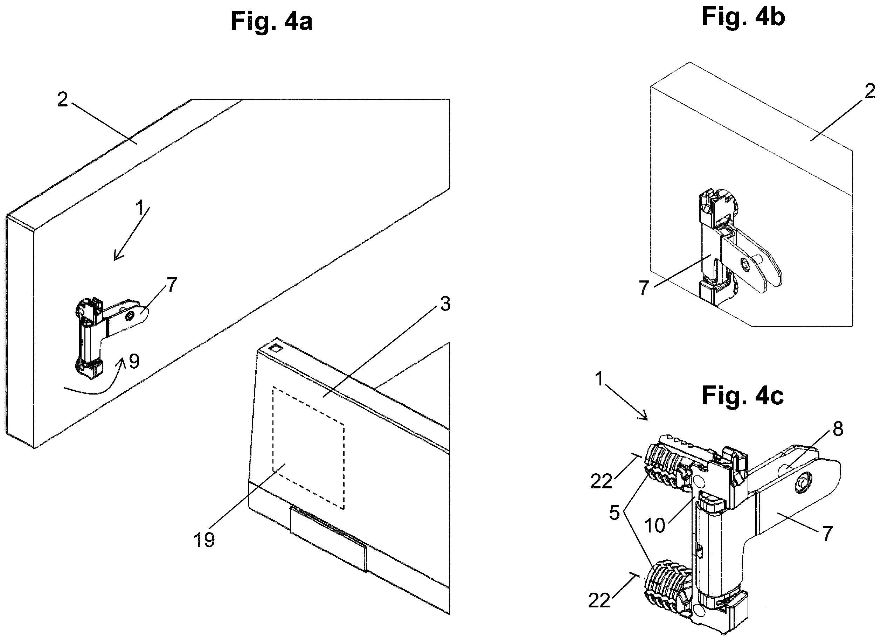

Fig. 4a zeigt das erfindungsgemäße Ausführungsbeispiel eines Möbelbeschlags 1 der Fig. 3a bis 3c, wobei der Beschlagkörper 7 durch eine Dreh- oder Schwenkbewegung in eine erste Betätigungsrichtung 9 in eine zweite Lösestellung gebracht wurde, wobei hierbei der Möbelbeschlag 1 zwar noch mit seinen Dübeln 5 in den Bohrungen 8 der Frontblende 2 angeordnet ist, aber nicht mehr durch eine Aufweitung der Dübel 5 in den Bohrungen 18 gehalten wird.

Der Beschlagkörper 7 wurde dabei wiederum in eine erste Betätigungsrichtung 9 um eine Drehachse 11 gedreht oder geschwenkt, welche Drehachse 11 quer zu den Mittelachsen 22 der Dübel 5 liegt.

Fig. 4b zeigt eine Detailansicht des Möbelbeschlags 1 der Fig. 4a.

In Fig. 4c ist eine Ansicht des Möbelbeschlags 1 in einer zweiten Lösestellung gezeigt, worin wiederum gut die Verbindungsvorrichtung 8 am Beschlagkörper 7 zu erkennen ist, wobei der Beschlagkörper 7 dreh- oder schwenkbar mit dem Träger 10 verbunden ist, wobei der Träger 10 mit den zwei Dübeln 5 verbunden ist. Gut zu erkennen ist in dieser Figur, dass sich die Dübel 5 in einer gelösten (nicht ausgeweiteten) Stellung befinden.

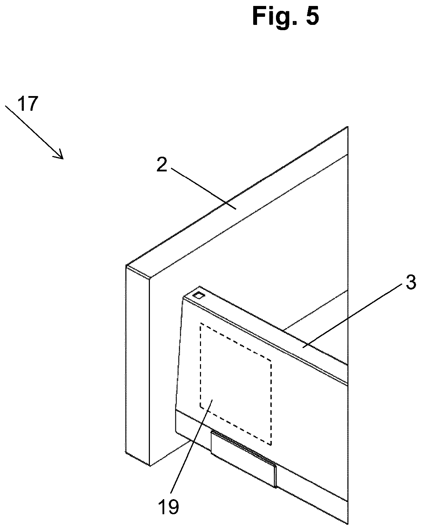

Fig. 5 zeigt eine Verbindung zweier Möbelteile mittels eines Ausführungsbeispiels eines erfindungsgemäßen Möbelbeschlags 1. Dabei wird der Möbelbeschlag 1, welcher durch eine Spannstellung mit der Frontblende 2 verbunden ist (wie in Fig. 3a und 3b gezeigt) in die Verriegelungsvorrichtung 19 der Seitenwand 3 eingeschoben und durch die Verriegelungsvorrichtung 19 verriegelt.

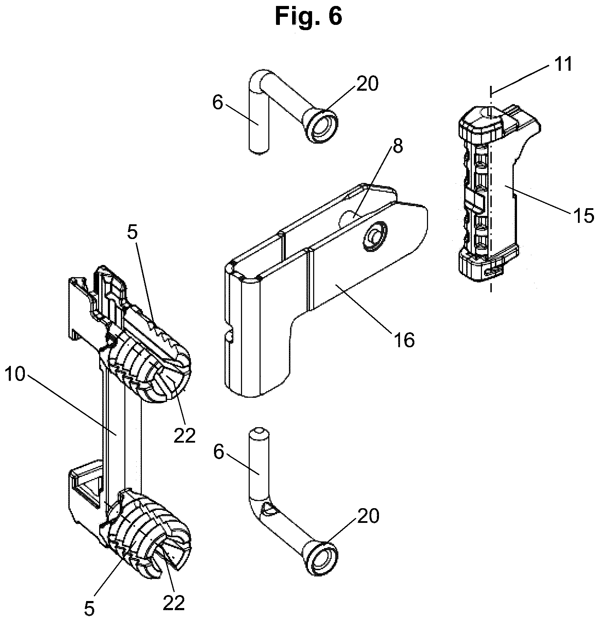

Fig. 6 zeigt eine Explosionsdarstellung eines Ausführungsbeispiels eines erfindungsgemäßen Möbelbeschlags 1. Dieser weist einen Träger 10 auf, an welchem zwei Dübel 5 befestigt sind. Die Spreizelemente 6 (wobei jeweils ein Spreizelement 6 einem Dübel 5 zugeordnet ist) weisen an einem Ende Spreiznocken 20 auf. In einem zusammengebauten Zustand werden die Spreizelemente 6 mit ihrem Schenkel an dessen Ende sich die Spreiznocken 20 befinden, im Inneren der Dübel 5 angeordnet. Das andere Ende der L-förmig ausgebildeten Spreizelemente 6 wird im Befestigungsmittel 15 befestigt. Der Beschlagkörper 7 ist in diesem Ausführungsbeispiel durch ein Befestigungsteil 15 und ein Führungsteil 16 gebildet, wobei das Führungsteil 16 eine als Bolzen ausgeführte Verbindungsvorrichtung 8 trägt. Im zusammengebauten Zustand wird das Befestigungsteil 15 in das Führungsteil 16 eingeschoben. Der Träger 10 wird im zusammengebauten Zustand durch die Spreizelemente 6, genauer gesagt durch die in den Dübeln 5 angeordneten Spreiznocken 20, über das Befestigungsteil 15 am Führungsteil 16 geführt oder gehalten, wodurch eine Dreh- oder Schwenkbewegung des Beschlagkörpers 7, genauer gesagt des Befestigungsteils 15 und des Führungsteils 16 in Bezug auf die Dübel 5 oder den Träger 10, ermöglicht wird. Die Schenkel des Spreizelements 6 erlauben dabei eine translatorische Bewegung der Dübel 5 und des mit den Dübeln 5 verbundenen Trägers 10. Die Dübel 5 weisen eine Mittelachse 22 auf.

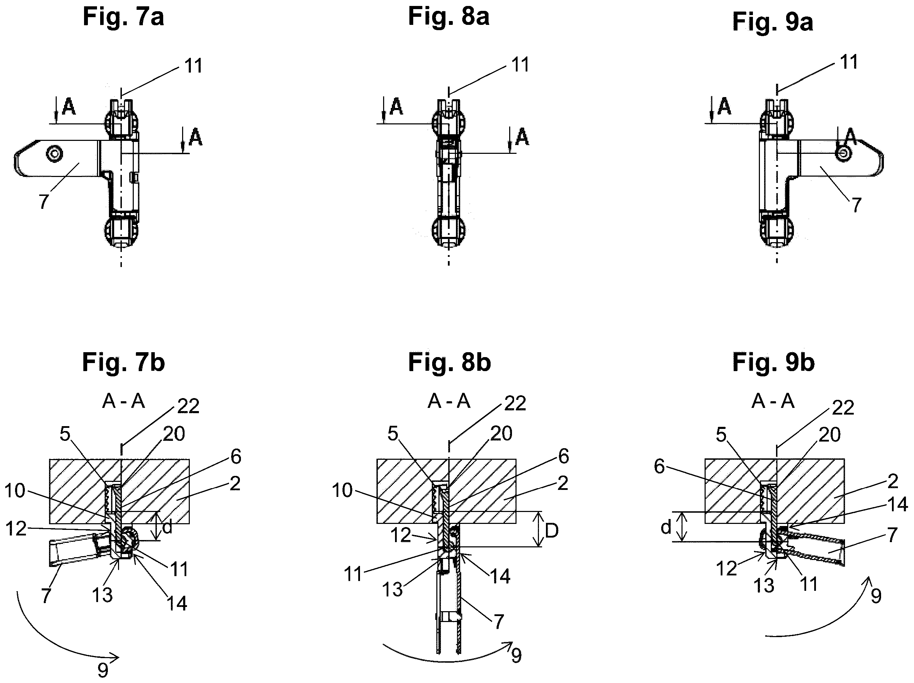

Fig. 7a, Fig. 8a und Fig. 9a zeigen wiederum das bereits beschriebene Ausführungsbeispiel eines erfindungsgemäßen Möbelbeschlages 1. Der Möbelbeschlag 1 ist ausgehend von einer ersten Lösestellung, wie in Fig. 7a gezeigt, durch eine Dreh- oder Schwenkbewegung in eine erste Betätigungsrichtung 9 in eine Spannstellung bewegbar (durch die Fig. 8a gezeigt). Durch Fortsetzen der Dreh- oder Schwenkbewegung des Beschlagkörpers 7 in eine erste Betätigungsrichtung 9 ist der Möbelbeschlages 1 in eine zweite Lösestellung bewegbar (in Fig. 9a gezeigt). Der Beschlagkörper 7 wurde dabei in eine erste Betätigungsrichtung 9 um eine Drehachse 11 gedreht oder geschwenkt, welche Drehachse 11 quer zu den Mittelachsen 22 der Dübel 5 liegt. Genauer gesagt liegt die Drehachse 11 in diesem Ausführungsbeispiel im Wesentlichen rechtwinklig zu den Mittelachsen 22 der Dübel 5.

Der in Fig. 7a gezeigte Möbelbeschlag 1 befindet sich in einer Lösestellung. Fig. 7b zeigt dabei den in Fig. 7a angedeuteten Schnitt. Durch die Schnittdarstellung ist gut zu erkennen, wie die Dübel 5 des Möbelbeschlags 1 in einer Bohrung 18 einer Frontblende 2 angeordnet sind. Zentral in den Dübeln 5 ist das Spreizelement 6 mit der Spreiznocke 20 angeordnet, wobei die Spreizelemente 6 um eine Drehachse 11 bewegbar sind. Die Dübel 5 sind mit einem Träger 10 verbunden, wobei der Beschlagkörper 7 mit seiner ersten Anlagefläche 12 am Träger 10 anliegt. Der Beschlagkörper 7 ist dreh- oder schwenkbar um die Drehachse 11 angeordnet. Die Dübel 5 weisen einen Abstand d zur Drehachse 11 auf. Durch eine Dreh- oder Schwenkbewegung des Beschlagkörpers 7 in eine erste Betätigungsrichtung 9 kann der Möbelbeschlag 1 aus der ersten Lösestellung in eine Spannstellung überführt werden.

Diese Spannstellung des Möbelbeschlags 1 ist in Fig. 8a gezeigt. Wiederum ist der angedeutete Schnitt der Fig. 8a in der Fig. 8b dargestellt. In Fig. 8b ist zu erkennen, wie durch die Dreh- oder Schwenkbewegung des Beschlagkörpers 7 in eine erste Betätigungsrichtung 9 der Beschlagkörper 7 von seiner ersten Anlagefläche 12 zu seiner zweiten Anlagefläche 13 am Träger 10 übergeführt wurde. Die zweite Anlagefläche 13 weist einen größeren Abstand D zur Drehachse 11 auf, als die erste Anlagefläche 12, wodurch die Spreizelemente 6, welche mit dem Beschlagkörper 7 befestigt sind im Dübel 5 axial bewegt wurden. Genauer gesagt: die Spreizelemente 6 wurden mit ihren Spreiznocken 20 in das Innere der Dübel 5 gezogen, wodurch sie die Dübel 5 aufspreizen. Dies geschieht, indem der Abstand d zwischen den Dübeln 5 und der Drehachse 11 (durch die Fig. 7b gezeigt) auf den Abstand D (in Fig. 8b gezeigt) vergrößert wurde. Durch das Aufspreizen 5 wird der Dübel 5 mit seiner Mantelfläche an eine Innenseite der Bohrungen 18 der Frontblende 2 gepresst, wodurch der Möbelbeschlag 1 durch die zwischen den Dübeln 5 und den Bohrungen 18 wirkenden Druckkräfte an der Frontblende 2 gehalten wird.

Durch Fortsetzen der Dreh- oder Schwenkbewegung des Beschlagkörpers 7 in die erste Betätigungsrichtung 9 wird der Möbelbeschlag 1 in eine zweite, von der ersten verschiedene, Lösestellung bewegt. Diese zweite Lösestellung des Möbelbeschlags 1 ist in der Fig. 9a gezeigt.

Wiederum ist der in Fig. 9a angedeutete Schnitt in Fig. 9b gezeigt, wobei zu erkennen ist, dass der Beschlagkörper 7 nun mit seiner dritten Anlagefläche 14 am Träger 10 anliegt, wobei die dritte Anlagefläche 14 in diesem Ausführungsbeispiel einen verkleinerten Abstand d relativ zur Drehachse 11 als die zweite Anlagefläche 13 aufweist. Genauer gesagt weist die dritte Anlagefläche 14 den gleichen Abstand d zur Drehachse 11 auf, als die erste Anlagefläche 12. Durch dieses Fortsetzen der Dreh- oder Schwenkbewegung des Beschlagkörpers 7 in die erste Betätigungsrichtung 9 wurde der Abstand D zu einem Abstand d verkleinert, wodurch die Spreizelemente 6 - genauer gesagt, die Spreiznocken 20
- aus den Dübeln 5 herausgeschoben werden und die Dübel 5 wieder entspannt wurden.

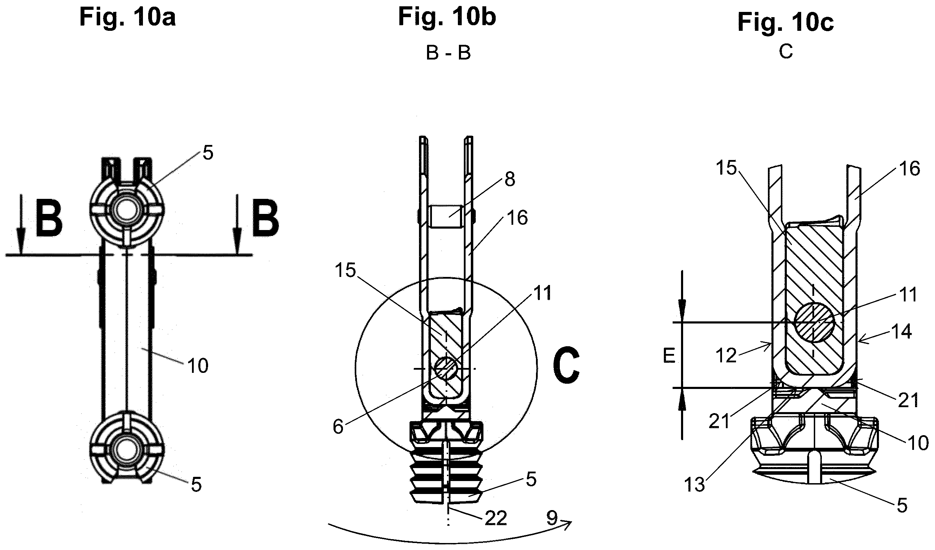

Fig. 10a zeigt ein Ausführungsbeispiel eines erfindungsgemäßen Möbelbeschlags 1 in einer Spannstellung. Dabei ist in Fig. 10a eine Frontansicht des Möbelbeschlags 1 dargestellt. In Fig. 10a sind zwei Dübel 5 erkennbar, welche mit einem Träger 10 verbunden sind. Der in Fig. 10a gekennzeichnete Schnitt B-B ist durch die Darstellung der Fig. 10b gezeigt. Durch diese Schnittdarstellung ist schön zu erkennen, wie der Träger 10, welcher mit den Dübeln 5 verbunden ist, an einer zweiten Anlagefläche 13 des Beschlagkörpers 7 anliegt. Der Träger 10 liegt dabei an einer zweiten Anlagefläche 13 am Führungsteil 16 an, da der Beschlagkörper 7 in diesem Ausführungsbeispiel, durch das Führungsteil 16 und das Befestigungsteil 15, zweiteilig ausgebildet ist. Das Befestigungsteil 15, welches im Führungsteil 16 angeordnet ist, weist eine Drehachse 11 auf, um welche das Spreizelement 6 drehbar gelagert ist.

Fig. 10c zeigt die Detailansicht C der Fig. 10b, in welcher wiederum das Anliegen des Trägers 10 an einer zweiten Anlagefläche 13 des Führungsteils 16 gezeigt ist. In dieser Figur ist gut zu erkennen, dass durch das Anliegen des Trägers 10 an der zweiten Anlagefläche 13 ein Abstand E zwischen der Drehachse 11 und dem Träger 10 vorhanden ist.

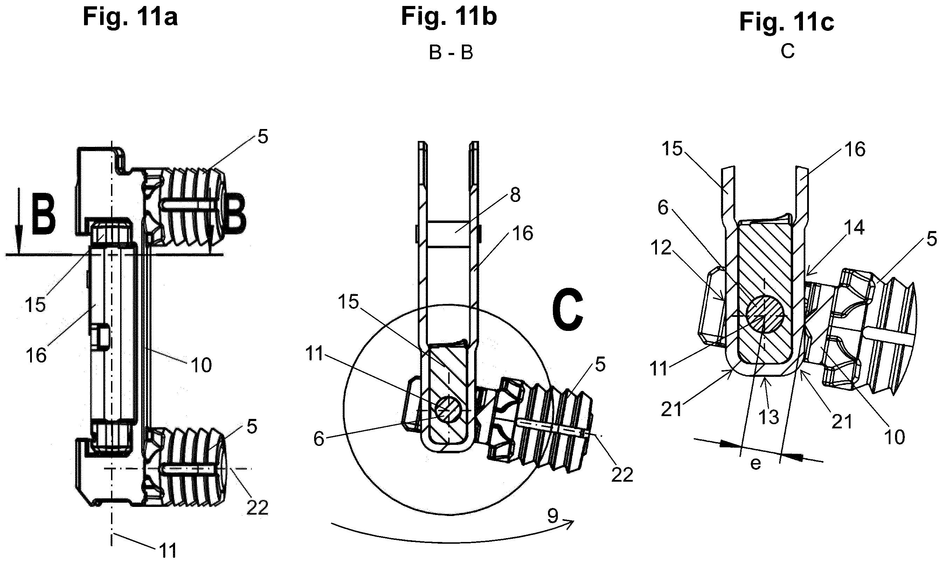

Durch Drehen oder Schwenken des Beschlagkörpers 7 in eine erste Betätigungsrichtung 9, genauer gesagt, durch ein Drehen oder Schwenken des Führungsteils 16 und des damit verbundenen Befestigungsteils 15 in eine erste Betätigungsrichtung 9, kann der in Fig. 10a bis 10c dargestellte Möbelbeschlag 1 in eine zweite Lösestellung übergeführt werden, welche in Fig. 11a gezeigt ist.

In Fig. 11a ist gut zu erkennen, wie die Dübel 5 und der damit verbundene Träger 10 nun in einer geschwenkten oder gekippten Position zum Beschlagkörper 7 steht. In Fig. 11b ist dabei der in Fig. 11a angedeutete Schnitt B-B dargestellt. Das gezeigte Detail C der Fig. 11b ist durch die Fig. 11c dargestellt. In Fig. 11c ist zu erkennen, wie der Träger 10 an einer dritten Anlagefläche 14 des Führungsteils 16 anliegt und dadurch einen Abstand e zu der Drehachse 11 aufweist, wobei dieser Abstand e einen verkleinerten Abstand zu dem Abstand E darstellt. Das Spreizelement 6 ist wiederum in der Drehachse 11 gelagert, genauer gesagt im Befestigungsteil 15 gelagert, wobei das Befestigungsteil 15 durch das Führungsteil 16 aufgenommen wird. Das Befestigungsteil 15 und das Führungsteil 16 bilden gemeinsam den Beschlagkörper 7.

Durch die dreh- oder schwenkbare Lagerung des Spreizelements 6 kann dieses bei einer Dreh- oder Schwenkbewegung des Beschlagkörpers 7, genauer gesagt, des Befestigungsteils 15 und des Führungsteils 16 rotatorisch bewegt werden. Dadurch, dass sich ein Abstand e durch eine Dreh- oder Schwenkbewegung zwischen Träger 10 oder den Dübeln 5 und der Drehachse 11 ändert, wird das L-förmig ausgebildete Spreizelement 6 in eine axiale Richtung im Dübel 5 verschoben. Durch diese axiale Verschiebung des Spreizelementes 6 im Dübel 5 kann eine Spreizung bzw. eine Lösung des Dübels 5 vorgenommen werden. In diesem Ausführungsbeispiel wird das dadurch erreicht, dass der Dübel 5 geschlitzt ausgeführt ist, wobei das Spreizelement 6 an einem freien Ende (welches durch den Dübel 5 ragt) einen Spreiznocken 20 aufweist. Wenn nun dieser Spreiznocken 20 durch das Spreizelement 6 in den Dübel 5 geschoben wird, wird der geschlitzte Dübel 5 aufgeweitet und seine Mantelfläche wird vergrößert. Wenn nun dieser Dübel 5 in einer dafür vorgesehenen Bohrung 18 angeordnet ist, wird durch diese Aufspreizung des Dübels 5 zwischen der Bohrung 18 und der Mantelfläche des Dübels 5 eine Druckkraft aufgebaut. Wird nun der Spreiznocken 20 oder das Spreizelement 6 wieder aus dem Dübel 5 ausgeschoben, so federt der Dübel 5 in seine Ausgangsposition zurück und verkleinert seine Mantelfläche, wodurch es wieder möglich ist, den Dübel 5 mit wenig Aufwand aus einer Bohrung 18 zu entfernen. Diese Rückfederung des Dübels 5 kann durch eine geeignete Materialwahl für den Dübel 5 erreicht werden, wobei darauf zu achten ist, dass sich die Aufspreizung des Dübels 5 stets in einem elastischen Verformungsbereich befindet, wodurch der Dübel 5 bei Kraftrücknahme (Entfernen des Spreizelementes 6) aus eigenen Kräften wieder in seine Ausgangsposition rückfedert.

Weiters kann vorgesehen sein, dass der Beschlagkörper 7 gegenüber dem wenigstens einen Dübel 5 zumindest in der Spannstellung, vorzugsweise auch in der ersten und der zweiten Lösestellung, eine vordefinierte Rastposition aufweist. In den Figuren 10a bis 10c und Figuren 11a bis 11c kann dies gut erkannt werden, wobei zwischen der ersten Auflagefläche 12 und der zweiten Auflagefläche 13 sowie zwischen der zweiten Auflagefläche 13 und der dritten Auflagefläche 14 des Führungsteils 16 eine exzentrische, abgerundete Kante 21 ausgebildet ist. Bei einer Dreh- oder Schwenkbewegung zwischen der ersten Anlagefläche 12 und der zweiten Anlagefläche 13 oder der zweiten Anlagefläche 13 und der dritten Anlagefläche 14 muss nun der an der Anlagefläche anliegende Träger 10 über diese exzentrische, abgerundete Kante 21 bewegt werden, wodurch das Spreizelement 6 im Dübel 5 - genauer gesagt, der Spreiznocken 20 - in den Dübel 5 geschoben wird. Da der Dübel 5 eine elastische Verformung aufweist, wird jedoch durch diesen Dübel 5 eine Rückfederkraft auf das Spreizelement 6 ausgeübt, da der Dübel 5 stets dazu tendiert, in seine Ausgangsposition zurückzukehren. Wenn nun diese exzentrische, abgerundete Kante 21 überwunden ist, wird der Abstand wieder verkleinert und das Spreizelement 6 aus dem Inneren des Dübels 5 ein wenig ausgeschoben bzw. durch den Dübel 5 durch seine Rückfederung ausgedrückt. So liegt immer in der Mitte der Anlageflächen 12, 13, 14 der geringste Abstand zu der Drehachse 11 vor. Wenn ein anliegender Träger 10 aus dieser Mittelposition der Anlagenflächen 12, 13, 14 bewegt wird, wird jeweils der Abstand vergrößert. Da der Dübel 5 jedoch eine Rückfederung aufweist, wird dieser stets dazu veranlasst sein, einen möglichst geringen Abstand zwischen Träger 10 und Drehachse 11 aufzuweisen, wodurch jeweils immer in der Mitte der Anlageflächen 12, 13, 14 eine vordefinierte Rastposition vorgesehen ist. Der Beschlagkörper 7 wird dabei in eine erste Betätigungsrichtung 9 um eine Drehachse 11 gedreht oder geschwenkt, welche Drehachse 11 quer zu der Mittelachse 22 des Dübels 5 liegt. Genauer gesagt liegt die Drehachse 11 in diesem Ausführungsbeispiel im Wesentlichen rechtwinklig zu der Mittelachsen 22 des Dübels 5.

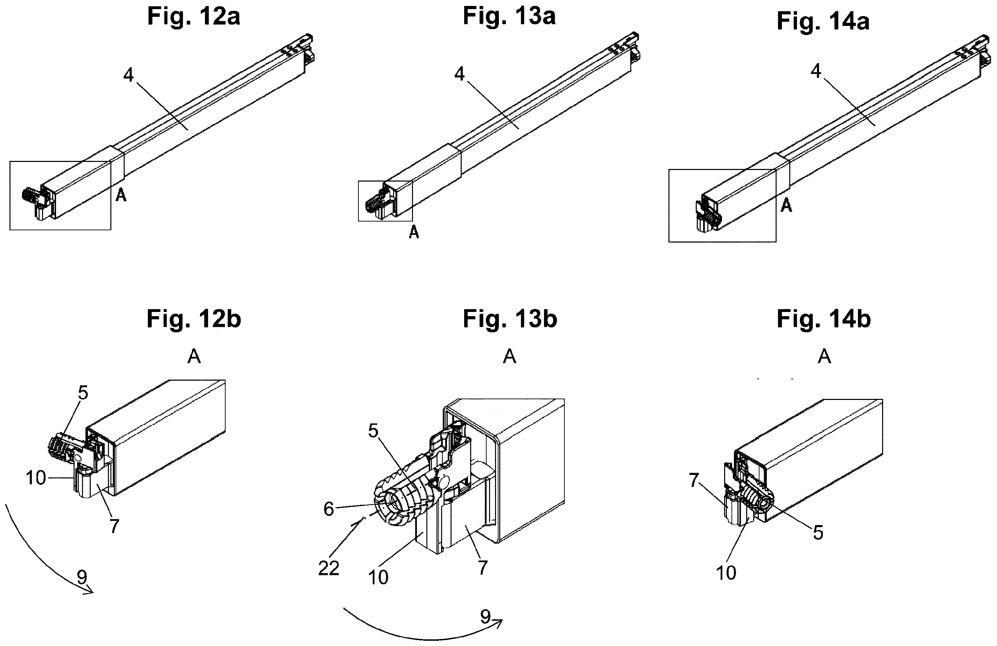

In den Figuren 12a bis 14b ist ein Ausführungsbeispiel eines erfindungsgemäßen Möbelbeschlags 1 gezeigt, wobei der Beschlagkörper 7 als Halteteil für eine Schubladenreling 4 ausgebildet ist. In Fig. 12a ist dabei der Beschlagkörper 7 in einer ersten Löseposition angeordnet. Durch eine Drehoder Schwenkbewegung dieses in Fig. 12a in einer ersten Lösestellung angeordneten Beschlagkörpers 7 in eine erste Bewegungsrichtung 9 kann der Dübel 5 in eine Spannstellung überführt werden, welche durch Fig. 13a gezeigt ist. Durch Fortsetzen der Dreh- oder Schwenkbewegung des Beschlagkörpers 7 in die erste Betätigungsrichtung 9 kann der Dübel 5, ausgehend von der Spannstellung, in eine zweite Lösestellung bewegt werden, welche von der ersten Lösestellung verschieden ist. Diese zweite Lösestellung ist durch die Fig. 14a gezeigt. Die in den Figuren 12a, 13a und 14a angedeuteten Detailansichten A sind jeweils durch die Figuren 12b, 13b und 14b gezeigt.

Im näheren Detail erkennt man in Fig. 12b den Dübel 5 in einer ersten Lösestellung. Der Dübel 5 ist an einem Träger 10 befestigt, welcher an einem Beschlagkörper 7 anliegt. Dieses Ausführungsbeispiel verfügt über dieselbe Funktionalität, wie in den zuvor beschriebenen Figuren, wobei wiederum im Dübel 5 ein L-förmig ausgebildetes Spreizelement 6 angeordnet ist, welches im Dübel 5 axial verschiebbar ist. Dieses L-förmig ausgebildete Spreizelement 6 ist des Weiteren im Beschlagkörper 7 schwenkbar befestigt. Auch dieses Ausführungsbeispiel verfügt (genauer gesagt, der Beschlagkörper 7 verfügt) über eine erste Anlagefläche 12, eine zweite Anlagefläche 13 und eine dritte Anlagefläche 14, wobei wenigstens zwei der Anlageflächen 12, 13, 14 einen zur Drehachse 11 unterschiedlichen Abstand d, D aufweisen. Genauer gesagt, weist die erste Anlagefläche 12 und die dritte Anlagefläche 14 denselben verkleinerten Abstand d auf. Die zweite Anlagefläche 13 weist einen vergrößerten Abstand D auf. In der Stellung, welche durch Fig. 12b gezeigt ist, befindet sich der Träger 10 an einer ersten Anlagefläche 12 mit einem Abstand d, wodurch das Spreizelement 6 mit seinem am freien Ende angeordneten Spreiznocken 20 in einer ausgeschobenen Position im Dübel 5 befindet, wobei der Dübel 5 in einer ersten Lösestellung verharrt.

In Fig. 13b ist eine Spannstellung des Dübels 5 gezeigt, welche durch die aufgespreizte Form des Dübels 5 ersichtlich ist. Hierfür wurde der Beschlagkörper 7 in eine erste Betätigungsrichtung 9 relativ zum Träger 10 gedreht oder geschwenkt, wobei nun der Träger 10 an einer zweiten Anlagefläche 13 des Beschlagkörpers 7 anliegt, welcher einen vergrößerten Abstand D zur Drehachse 11 aufweist. Durch diesen vergrößerten Abstand D wird das Spreizelement 6 in das Innere des Dübels 5 gezogen, wodurch der am freien Ende des Spreizelementes 6 befestigte Spreiznocken 20 den Dübel 5 ausspreizt.

Durch ein Fortsetzen der Dreh- oder Schwenkbewegung des Beschlagkörpers 7 in eine erste Betätigungsrichtung 9 kann der Dübel 5 wieder aus der Spannstellung in eine zweite Lösestellung übergeführt werden, welche durch die Fig. 14b dargestellt ist. Dabei ist schön zu erkennen, wie der Träger 10 nun an einer dritten Anlagefläche 14 des Beschlagkörpers 7 anliegt, welche dritte Anlagefläche 14 zu der Drehachse 11 einen wieder verkleinerten Abstand d aufweist, wodurch das Spreizelement 6 aus dem Dübel 5 ausgeschoben wird und der Dübel 5 in seine Ausgangsposition (oder auch eine zweite Lösestellung) rückfedert.

In den Figuren 12a bis 14b ist der Beschlagkörper 7 mit einem inneren Teilstück der Schubladenreling 4 einstückig ausgebildet. Die Schubladenreling 4 kann mit ihrem gegenüber des Dübels 5 liegenden Ende - wie durch den Stand der Technik bekannt - mit einem Gegenstück verbunden werden. Dabei kann eine Schubladenreling 4 zwei Teile einer Schublade 17 verbinden und gegebenenfalls parallel und oberhalb einer Seitenwand 3 einer Schublade 17 verlaufen.

### Bezugszeichenliste:

- 1: Möbelbeschlag
- 2: Frontblende
- 3: Seitenwand einer Schublade
- 4: Schubladenreling
- 5: Dübel
- 6: Spreizelement
- 7: Beschlagkörper
- 8: Verbindungsvorrichtung
- 9: Betätigungsrichtung
- 10: Träger
- 11: Drehachse
- 12: Anlagefläche
- 13: Anlagefläche
- 14: Anlagefläche
- 15: Befestigungsteil
- 16: Führungsteil
- 17: Schublade
- 18: Bohrung
- 19: Verriegelungsvorrichtung
- 20: Spreiznocken
- 21: Kante
- 22: Mittelachse
- d: Abstand
- D: Abstand
- e: Abstand
- E: Abstand

## Patentansprüche

1. Möbelbeschlag (1) zum Verbinden zweier Möbelteile, mit wenigstens einem Dübel (5) zur Befestigung des Möbelbeschlages (1) an einem der beiden Möbelteile, wenigstens einem relativ zum Dübel (5) bewegbar gelagerten Spreizelement (6), wobei der wenigstens eine Dübel (5) ausgehend von einer ersten Lösestellung durch eine Relativbewegung des wenigstens einen Spreizelementes (6) in eine Spannstellung überführbar ist, und einem Beschlagkörper (7), welcher wenigstens eine Verbindungsvorrichtung (8) zur Verbindung des Möbelbeschlages (1) mit dem anderen der beiden Möbelteile aufweist, und wobei der Beschlagkörper (7) derart mit dem wenigstens einen Spreizelement (6) verbunden ist, dass der wenigstens eine Dübel (5) durch eine Dreh- oder Schwenkbewegung des Beschlagkörpers (7) in eine erste Betätigungsrichtung (9) ausgehend von der ersten Lösestellung in die Spannstellung bewegbar ist, wobei der wenigstens eine Dübel (5) ausgehend von der Spannstellung durch Fortsetzen der Dreh- oder Schwenkbewegung des Beschlagkörpers (7) in die erste Betätigungsrichtung (9) in eine, von der ersten Lösestellung verschiedene zweite Lösestellung bewegbar ist, **dadurch gekennzeichnet, dass** das wenigstens eine Spreizelement (6) als L-förmiger Bügel ausgeführt ist, dessen einer Schenkel axial im wenigstens einen Dübel (5) geführt ist und dessen anderer Schenkel im Beschlagkörper (7) drehbar gelagert ist.

2. Möbelbeschlag nach dem vorangegangenen Anspruch, **dadurch gekennzeichnet, dass** der wenigstens eine Dübel (5) eine Mittelachse (22) aufweist und der Beschlagkörpers (7) im Zuge der Dreh- oder Schwenkbewegung um eine Drehachse (11) dreh- oder schwenkbar ist, wobei die Drehachse (11) quer, vorzugsweise rechtwinklig, zur Mittelachse (22) angeordnet ist.

3. Möbelbeschlag nach einem der vorangegangenen Ansprüche, **dadurch gekennzeichnet, dass** das wenigstens eine Spreizelement (6) - vorzugsweise am freien Ende - einen Spreiznocken (20) aufweist, welcher Spreiznocken (20) im wenigstens einen Dübel (5) angeordnet ist.

4. Möbelbeschlag nach einem der vorangegangenen Ansprüche, **dadurch gekennzeichnet, dass** der wenigstens eine Dübel (5) mit einem Träger (10) verbunden ist und dass das wenigstens eine Spreizelement (6) um eine Drehachse (11) drehbar am Beschlagköper (7) gelagert ist.

5. Möbelbeschlag nach dem vorangegangenen Anspruch, **dadurch gekennzeichnet, dass** der Beschlagkörper (7) drei Anlageflächen (12, 13, 14) aufweist, von denen jeweils eine je nach Stellung des Beschlagkörpers (7) am Träger (10) anliegt, und von denen zumindest zwei einen unterschiedlichen Abstand (d, D) zur Drehachse (11) aufweisen.

6. Möbelbeschlag nach einem der vorangegangenen Ansprüche, **dadurch gekennzeichnet, dass** durch eine Dreh- oder Schwenkbewegung des Beschlagkörpers (7) gegenüber dem wenigstens einen Dübel (5) ein Abstand (D, d) zwischen einer Drehachse (11), in welcher das wenigstens eine Spreizelement (6) im wenigstens einen Beschlagkörper (7) drehbar gelagert ist, und dem wenigstens einem Dübel (5) vergrößerbar oder verkleinerbar ist.

7. Möbelbeschlag nach einem der vorangegangenen Ansprüche, **dadurch gekennzeichnet, dass** der Beschlagkörper (7) wenigstens zweiteilig ausgebildet ist, wobei ein Befestigungsteil (15) zur Befestigung des wenigstens einen Spreizelementes (6) vorgesehen ist und ein Führungsteil (16) vorgesehen ist, wobei das Führungsteil (16) an dem wenigstens einen Dübel (5) und/oder einem Träger (10) anliegt, wobei der Träger (10) mit dem wenigstens einem Dübel (5) verbunden ist.

8. Möbelbeschlag nach einem der vorangegangenen Ansprüche, **dadurch gekennzeichnet, dass** der Beschlagkörper (7) gegenüber dem wenigstens einen Dübel (5) zumindest in der Spannstellung, vorzugsweise auch in der ersten und der zweiten Lösestellung, eine vordefinierte Rastposition aufweist.

9. Möbelbeschlag nach einem der vorangegangenen Ansprüche, **dadurch gekennzeichnet, dass** der Beschlagkörper (7) als Halteteil für eine Frontblende (2) einer Schublade (17) ausgebildet ist.

10. Möbelbeschlag nach einem der Anspruche 1 bis 8, **dadurch gekennzeichnet, dass** der Beschlagkörper (7) als Halteteil für eine Schubladenreling (4) ausgebildet ist.

11. Möbel mit wenigstens zwei Möbelteilen, welche durch zumindest einen Möbelbeschlag (1) nach wenigstens einem der vorangegangenen Ansprüche miteinander verbunden sind.

## Claims

1. A furniture fitting (1) for connecting two furniture parts, comprising at least one dowel (5) for fixing the furniture fitting (1) to one of the two furniture parts, at least one spreader element (6) mounted movably relative to the dowel (5), wherein the at least one dowel (5) can be transferred from a first release position into a clamping position by a relative movement of the at least one spreader element (6), and a fitting body (7) which has at least one connecting device (8) for connecting the furniture fitting (1) to the other of the two furniture parts, and wherein the furniture fitting (7) is so connected to the at least one spreader element (6) that the at least one dowel (5) is movable from the first release position into the clamping position by a rotary or pivotal movement of the fitting body (7) in a first actuation direction (9), wherein the at last one dowel (5) is movable from the clamping position into a second release position different from the first release position by continuation of the rotary or pivotal movement of the fitting body (7) in the first actuation direction (9), **characterised in that** the at least one spreader element (6) is in the form of an L-shaped member of which one limb is guided axially in the at least one dowel (5) and the other limb is mounted rotatably in the fitting body (7).

2. A furniture fitting according to the preceding claim **characterised in that** the at least one dowel (5) has a central axis (22) and the fitting body (7) in the course of the rotary or pivotal movement is rotatable or pivotable about an axis of rotation (11), wherein the axis of rotation (11) is arranged transversely, preferably at a right angle, to the central axis (22).

3. A furniture fitting according to one of the preceding claims **characterised in that** the at least one spreader element (6) - preferably at the free end - has a spreader cam (20), which spreader cam (20) is arranged in the at least one dowel (5).

4. A furniture fitting according to one of the preceding claims **characterised in that** the at least one dowel (5) is connected to a carrier (10) and the at least one spreader element (6) is mounted to the fitting body (7) rotatably about an axis of rotation (11).

5. A furniture fitting according to the preceding claim **characterised in that** the fitting body (7) has three contact surfaces (12, 13, 14), of which a respective one bears against the carrier (10) depending on the respective position of the fitting body (7) and of which at least two are at a different spacing (d, D) relative to the axis of rotation (11).

6. A furniture fitting according to one of the preceding claims **characterised in that** a spacing (D, d) between an axis of rotation (11), in which the at least one spreader element (6) is mounted rotatably in the at least one fitting body (7), and the at least one dowel (5) can be increased or reduced by a rotary or pivotal movement of the fitting body (7) relative to the at least one dowel (5).

7. A furniture fitting according to one of the preceding claims **characterised in that** the furniture fitting (7) is of an at least two-part structure, wherein there is provided a fixing part (15) for fixing the at least one spreader element (6) and there is provided a guide part (16), wherein the guide part (16) bears against the at least one dowel (5) and/or a carrier (10), the carrier (10) being connected to the at least one dowel (5).

8. A furniture fitting according to one of the preceding claims **characterised in that** the fitting body (7) has a predefined latching position with respect to the at least one dowel (5) at least in the clamping position, preferably also in the first and second release positions.

9. A furniture fitting according to one of the preceding claims **characterised in that** the fitting body (7) is in the form of a holding part for a front panel (2) of a drawer (7).

10. A furniture fitting according to one of claims 1 to 8 **characterised in that** the fitting body (7) is in the form of a holding part for a drawer rail (4).

11. An article of furniture comprising at least two furniture parts which are connected together by at least one furniture fitting (1) according to at least one of the preceding claims.

## Revendications

1. Ferrure de meuble (1) destinée à assembler deux parties de meuble, avec au moins une cheville (5) pour la fixation de la ferrure de meuble (1) sur une des deux parties de meuble, au moins un élément d'écartement (6) monté de manière à pouvoir être déplacé par rapport à la cheville (5), dans laquelle l'au moins une cheville (5) peut être transférée dans une position de serrage par un déplacement relatif de l'au moins un élément d'écartement (6) en partant d'une première position de desserrage, et un corps de ferrure (7), qui présente au moins un dispositif d'assemblage (8) destiné à assembler la ferrure de meuble (1) à l'autre des deux parties de meuble, et dans laquelle le corps de ferrure (7) est assemblé à l'au moins un élément d'écartement (6) de telle manière que l'au moins une cheville (5) peut être déplacée dans la position de serrage en partant de la première position de desserrage par un déplacement par rotation ou pivotement du corps de ferrure (7) dans une première direction d'actionnement (9), dans laquelle l'au moins une cheville (5) peut être déplacée dans une deuxième position de desserrage différente de la première position de desserrage en partant de la position de serrage en poursuivant le déplacement par rotation ou par pivotement du corps de ferrure (7) dans la première direction d'actionnement (9), **caractérisée en ce que** l'au moins un élément d'écartement (6) est réalisé en tant qu'étrier en forme de L, dont une branche est guidée axialement dans l'au moins une cheville (5) et dont l'autre branche est montée de manière à pouvoir tourner dans le corps de ferrure (7).

2. Ferrure de meuble selon la revendication précédente, **caractérisée en ce que** l'au moins une cheville (5) présente un axe central (22) et le corps de ferrure (7) peut être tourné ou pivoté autour d'un axe de rotation (11) dans le cadre du déplacement par rotation ou par pivotement, dans laquelle l'axe de rotation (11) est disposé transversalement, de préférence à angle droit, par rapport à l'axe central (22).

3. Ferrure de meuble selon l'une quelconque des revendications précédentes, **caractérisée en ce que** l'au moins un élément d'écartement (6) présente - de préférence sur l'extrémité libre - une came d'écartement (20), laquelle came d'écartement (20) est disposée dans l'au moins une cheville (5).

4. Ferrure de meuble selon l'une quelconque des revendications précédentes, **caractérisée en ce que** l'au moins une cheville (5) est assemblée à un support (10) et que l'au moins un élément d'écartement (6) est monté sur le corps de ferrure (7) de manière à pouvoir tourner autour d'un axe de rotation (11).

5. Ferrure de meuble selon la revendication précédente, **caractérisée en ce que** le corps de ferrure (7) présente trois surfaces d'appui (12, 13, 14), dont respectivement une repose sur le support (10) en fonction de la position du corps de ferrure (7), et dont au moins deux présentent une distance (d, D) différente par rapport à l'axe de rotation (11).

6. Ferrure de meuble selon l'une quelconque des revendications précédentes, **caractérisée en ce qu'**une distance (D, d) entre un axe de rotation (11), dans lequel l'au moins un élément d'écartement (6) est monté de manière à pouvoir tourner dans l'au moins un corps de ferrure (7), et l'au moins une cheville (5) peut être augmentée ou réduite par un déplacement par rotation ou par pivotement du corps de ferrure (7) par rapport à l'au moins une cheville (5).

7. Ferrure de meuble selon l'une quelconque des revendications précédentes, **caractérisée en ce que** le corps de ferrure (7) est réalisé en au moins deux parties, dans laquelle une partie de fixation (15) est prévue pour la fixation de l'au moins un élément d'écartement (6) et une partie de guidage (16) est prévue, dans laquelle la partie de guidage (16) repose sur l'au moins une cheville (5) et/ou un support (10), dans laquelle le support (10) est assemblé à l'au moins une cheville (5).

8. Ferrure de meuble selon l'une quelconque des revendications précédentes, **caractérisée en ce que** le corps de ferrure (7) présente une position d'enclenchement prédéfinie par rapport à l'au moins une cheville (5) au moins dans la position de serrage, de préférence également dans la première et la deuxième position de desserrage.

9. Ferrure de meuble selon l'une quelconque des revendications précédentes, **caractérisée en ce que** le corps de ferrure (7) est réalisé comme une partie de maintien pour un panneau avant (2) d'un tiroir (17).

10. Ferrure de meuble selon l'une quelconque des revendications 1 à 8, **caractérisée en ce que** le corps de ferrure (7) est réalisé comme une partie de maintien pour un rail de tiroir (4).

11. Meuble avec au moins deux parties de meubles qui sont assemblées l'une à l'autre par au moins une ferrure de meuble (1) selon au moins l'une quelconque des revendications précédentes.
